# EUROPÄISCHE PATENTSCHRIFT

(11) **EP 3 954 519 B1**
(45) Veröffentlichungstag und Bekanntmachung des Hinweises auf die Patenterteilung: **12.11.2025**
(21) Anmeldenummer: 21194070.5
(22) Anmeldetag: 19.09.2017
(51) Int. Cl.: B27N 3/18, B27N 5/00, B27N 7/00, B29C 53/26, B29C 53/28

(54) **VERFAHREN ZUR HERSTELLUNG EINER DREIDIMENSIONAL VERFORMTEN PLATTE**
METHOD OF FORMING A THREE-DIMENSIONALLY SHAPED PLATE
MÉTHODE POUR LA PRODUCTION D'UN PANNEAU DÉFORMÉ EN TROIS DIMENSIONS

(43) Veröffentlichungstag der Anmeldung: 16.02.2022
(62) Teilanmeldung aus: 17191821.2
(73) Patentinhaber: Homann Holzwerkstoffe GmbH, 81925 München (DE)
(72) Erfinder: Homann, Fritz, 81925 München (DE)
(74) Vertreter: Brinkmann & Partner

(56) Entgegenhaltungen:
- EP-A2- 1 512 507
- DE-A1- 10 204 321
- DE-A1- 4 406 161
- JP-A- H10 278 014
- DATABASE WPI Week 199901, Derwent World Patents Index; AN 1999-003849
- DATABASE WPI Week 201169, Derwent World Patents Index; AN 2011-N02546

## Beschreibung

Die vorliegende Erfindung betrifft ein Verfahren zur Herstellung einer dreidimensional verformten Platte aus einem Holzfaser-Werkstoff. Weiterhin betrifft die Erfindung ein System zur Herstellung dreidimensional verformter Platten aus Holzfaser-Werkstoff.

Bei geringer Materialdicke ein großes Volumen durch die Wellenbildung einnehmen.

Durch Ausbildung der Faserplatte entsteht eine Platte, die im Verhältnis zu ihrer Rohdichte ein großes Volumen ausfüllt. Raumvolumen im Sinne der vorliegenden Erfindung bezeichnet den im Wesentlichen quaderförmigen Raum, der von der Platte ausgefüllt wird. Während Rohdichte oder Plattenvolumen selbst sich auf den feststofflichen Bereich der Platte beziehen ist das Raumvolumen dadurch gebildet, dass ebene Flächen auf den obersten und untersten Vorsprüngen der verformten Platte durch umlaufende Seitenkanten zu einem die Platte vollständig umschließenden Quader ergänzt werden. Dieser Quader hat ein Volumen, welches deutlich größer ist als das durch den feststofflichen Bereich der Platte selbst gebildete Volumen. Die Plattendicke wird gemäß einem vorteilhaften Vorschlag der Erfindung mindestens um den Faktor 3 von der Volumenhöhe überschritten.

Die Platte weist als besonderen Vorteil auf, dass sie erhöhte mechanische Eigenschaften mit einem geringen Raumgewicht verbindet. Durch die Ausbildung der Verformung wird die Platte in sich mechanisch stabiler. Es ist allgemein bekannt, dass gebogene oder geknickte Elemente bei Druckbelastung entlang der Knickachse besonders stabil sind. Im vorliegenden Fall ist die Platte aber auch aufgrund ihrer Rohdichte in Verformungsrichtung ausgesprochen stabil und bruchfest.

Die Platte hat den Vorteil, die Anwendungsbereiche solcher Platten erheblich zu erweitern. Eine solche Platte kann aufgrund ihres geringen Gewichtes im Vergleich zum Raumvolumen beispielsweise als Füllung eingesetzt werden. Derartige Einsatzbereiche ergeben sich beispielsweise bei der Herstellung von Türen und Wandelementen. Aufgrund ihrer mechanischen Festigkeit kann die Fläche angebohrt werden und Schrauben halten. Sie kann Nägel halten.

Sie kann direkt mit sogenannten Umleimern versehen werden, das heißt Leisten, die auf die Seitenkanten geklebt oder sonst wie befestigt werden. Aufgrund der dreidimensionalen Verformung bietet die Platte an den Seitenkanten eine erhebliche Befestigungsfläche.

Die Platten können auch im Rahmen von Sandwichaufbauten verwendet werden. Sie können mit gleichartigen, dreidimensional verformten Platten verbunden werden, indem diese übereinander gelegt und wie auch immer fixiert werden. Dabei ist es von Vorteil, wen die dreidimensionalen Verformungen zueinander winklig angeordnet werden. Werden zwei identische Platten beispielsweise mit einer Wellenkontur miteinander verbunden, so können diese rechtwinklig zueinander aufeinandergelegt werden. Auf diese Weise ergeben sich eine Vielzahl von Berührungspunkten, ein erhebliches Raumvolumen bei sehr geringem Plattengewicht. Die mechanische Stabilität ist immens.

Ein Nachteil der vorbekannten Technik besteht in dem Produktionsprozess. Gemäß dem Stand der Technik werden entsprechende verformte Platten aus den gestreuten Macken hergestellt. Sie sind also anschließend ihrerseits zu transportieren und vor Ort einzusetzen. Damit ist die Logistik belastet, wenn neben den herkömmlichen ebenen Platten müssen nun auch gewellte Platten in brauchbaren Formaten zu den unterschiedlichen Zwecken bereitgestellt werden.

Derartige Platten eignen sich aber ganz besonders für Bauten der unterschiedlichen Art, Wohnbalken, Schutzgehäuse im Bereich des Bohlenbaus, der elektrischen Anlagen und dergleichen, und stellen einen kostengünstigen aber sehr gut einsetzbaren Werkstoff insbesondere auch in abgelegenen und auch ärmeren Gegenden dar.

Dies steht jedoch den genannten logistischen Problemen entgegen, denn es wäre wünschenswert, vor Ort entscheiden zu können, ob die ebene Platte oder eine gewellte Platte gebaut wird, oder ob beispielsweise gezielte Produkte wie gewellte Dachschindeln und dergleichen verwendet werden.

Aus der EP 1 512 507 A2 ist ein Verfahren zum Nachformieren eines flachen vorher ausgebildeten Rohlings in eine gepresste Türhaut bekannt, wobei ein fester flacher Faserplattenrohling zwischen zwei Platten einer erwärmten Presse plaziert und in eine gepresste Form umgeformt wird. JP 2011 207159 A offenbart einen weiteren gleichwertigen, nächstliegenden Stand der Technik. Weiterer Stand der Technik ist offenbart in JP H10 278014 A, DE 102 04 321 A1, DE 44 06 161 A1

Ausgehend vom vorbestimmten Stand der Technik liegt der vorliegenden Erfindung die **Aufgabe** zugrunde, ein Verfahren und ein System zur Herstellung dreidimensional verformter Platten aus Holzfaser-Werkstoff bereitzustellen, welches den logistischen Aufwand verringert und bedarfsgerecht einsetzbar ist.

Zur technischen **Lösung** dieser Aufgabe wird mit der Erfindung vorgeschlagen ein Verfahren mit den Merkmalen des Patentanspruches 1. Weitere Vorteile und Merkmale ergeben sich aus den Unteransprüchen.

Hinsichtlich des Systems zur Herstellung entsprechender Platten ergibt sich die Lösung durch ein System mit den Merkmalen des Patentanspruches 10. Weitere Merkmale und Vorteile ergeben sich aus den darauf rückbezogenen Unteransprüchen.

Erfindungsgemäß wird eine vorgefertigte ebene Platte als Ausgangsplatte verwendet. Eine derartige Platte ist eine Holzfaser-Werkstoffplatte, wobei die Erfindung MDF-Platten vorschlägt. Eine solche MDF-Platte als Ausgangsplatte wird mit einem Flächengewicht von 1, 0 bis 3,0 kg/m² und einer Dicke von 1,0 bis 3 mm verwendet.

Derartige Platten sind Bestandteil des Systems, welches darüber hinaus eine Bearbeitungsanlage umfasst. Die Bearbeitungsanlage weist wenigstens eine Bedampfungseinheit und eine Formstation auf.

Eine Ausgangsplatte wird zunächst bedampft. Gemäß der Erfindung kann eine Bedampfung bei einer Temperatur von 100 bis 105°C und einem Dampfdruck von 0,1 bis 8 bar durchgeführt werden. Eine Dampfmenge kann sich von 60 bis 500 kg/h ergeben.

Nach der Bedampfung, bei Bedarf auch vor der Bedampfung oder während der Bedampfung wird die Ausgangsplatte mit einem Trennmittel beschichtet. Dies erfolgt gemäß einem Vorschlag der Erfindung durch Bedüsen. Das Trennmittel wird in Mengen von 10 bis 100 g/m² eingesetzt und dient in erster Linie dem Zweck, dass die bedampfte und zu verformende Platten nicht in der Formstation an den formgebenden Einheiten kleben bleibt.

Gemäß der Erfindung findet die Verformung zwischen wenigstens einem Walzenpaar statt.

Es kommen Riffelwalzen und Kalander in Frage, so dass sich eine Platte mit einer Wellenform ergibt. Diese kann eine Wellenhöhe von 6,5 bis 50 mm aufweisen und die Platte wird in der Regel um mindestens 30% verdichtet. D. h., eine Ausgangsplatte von 1,5 bis 3 mm ergibt eine Endmaterialdicke von 0,5 bis 2 mm.

Die Verformung kann bei Temperaturen um 250°C mit einem Druck im Bereich von 200 N/mm² durchgeführt werden. Bei Bedarf kann während der Verformung eine zusätzliche Temperaturzufuhr erfolgen, beispielsweise durch weiteren Dampf, Mikrowellentechnik oder Infrarotstrahlern oder vergleichbaren Wärmequellen. Die Platte kann auch durch mehrere Kalanderwalzenpaare mit Riffelwalzen geführt werden, mindestens jedoch durch ein Paar.

Die anschließende Auskühlung erfolgt vorzugsweise bei Umgebungstemperatur und kann je nach Materialdicke und Wellenhöhe im Bereich einiger Minuten liegen, beispielsweise 2 bis 5 mm.

Das erfindungsgemäße System umfasst einerseits vorgefertigte ebene Ausgangsplatten und andererseits die Bearbeitungsanlage. Die Bedampfungseinheit kann mehrere Dampfausgabeeinheiten aufweisen, so dass die ebene Ausgangsplatte dort hindurchgeführt wird. Anschließend wird die Platte einem Walzenpaar zugeführt oder einer Gruppe von Walzenpaaren.

Die Bearbeitungsanlage kann als mobile Einheit ausgebildet sein.

Die Erfindung ermöglicht es, dreidimensional verformte Platten nahezu an jedem beliebigen Ort vor Ort herzustellen. Teile der Bearbeitungsanlage wie beispielsweise das Bedüsen oder das Beschichten mit Trennmittel können manuell durchgeführt werden. Die Bedampfung muss kontrolliert und vollflächig erfolgen, so dass sich hier eine Bedampfungseinheit empfiehlt. Die Verformung zwischen zwei Walzen ist ebenfalls obligatorisch im Sinne des erfindungsgemäßen Systems.

Alle anderen Maßnahmen wie zusätzliche Bedampfung, Infrarothärtung, UV-Licht und dergleichen können auch separat eingesetzt werden.

Eine erfindungsgemäße Anlage kann als mobile Einheit ausgebildet sein. Auf diese Weise lassen sich die Einheiten zusammen mit den Ausgangsplatten an Ort und Stelle verarbeiten.

Die entsprechend verformten Platten haben eine Reihe von Vorteilen, beispielsweise eine höhere Stabilität und Steifigkeit und können zu anderen Bauzwecken als die reine ebene Platte verwendet werden. So lassen sich Dächer oder auch Schindeln erstellen und dergleichen.

Entsprechend können in der entsprechenden Phase des Verfahrens auch andere Beschichtungen der Plattenoberflächen erfolgen, beispielsweise um diese wasserfest zu machen, gegen Vorzuhärten und dergleichen. Diese Beschichtungen können zusammen mit dem Trennmittel erfolgen, wenn dies chemisch und technisch machbar ist.

Mit der Erfindung werden ein universell einsetzbares System und ein universell einsetzbares Verfahren vorgeschlagen, um auf einfache Weise brauchbare dreidimensional verformte, vorzugsweise gewellte Platten aus Holzfaser-Werkstoffen herzustellen.

Durch das erfindungsgemäße Verfahren und das erfindungsgemäße System wird die Logistik erheblich vereinfacht. Bedarfsträger beschaffen nach wie vor ebene Platten. Diese können sie nach Belieben konfektionieren, d. h. beispielsweise Schindelmaterial sägen, Wandfüllungen und dergleichen herstellen und so weiter. Anschließend können sie unter Verwendung der zum System gehörenden Bearbeitungsanlage die gewünschte Wellenstruktur erzeugen, so dass anschließend entsprechend geeignete stabile Platten zur Verfügung stehen.

Weitere Vorteile und Merkmale der Erfindung ergeben sich aus der folgenden Beschreibung anhand der Figuren. Dabei zeigen:

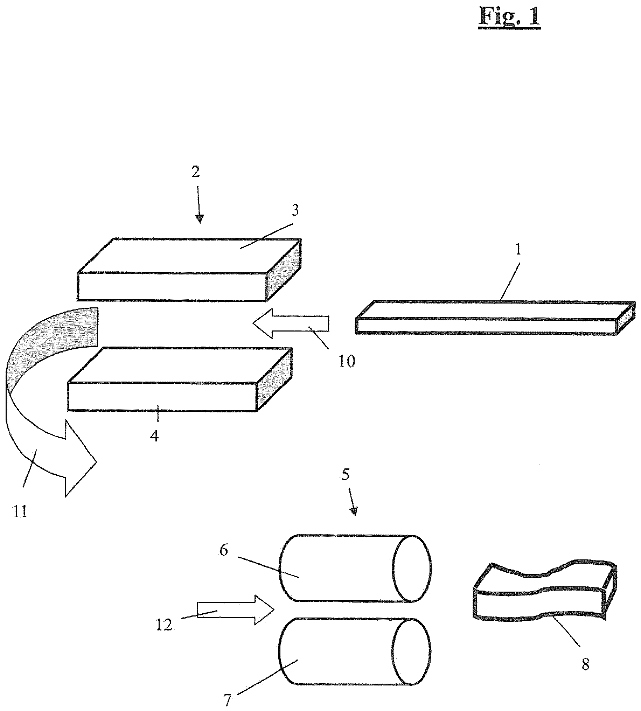

- Figur 1: eine schematische Ansicht eines Herstellungsprozesses in einer schematisch dargestellten Bearbeitungsanlage.

Gemäß Figur 1 wird eine ebene Ausgangsplatte 1 in Richtung des Pfeils 10 zwischen die Bedampfungselemente 3 und 4 einer Bedampfungseinheit 2 hindurchgeführt. Dabei wird die Platte von oben und unten bedampft, wobei die Bedampfungszeit in Abhängigkeit von der Dampfmenge und der Materialdicke der Platte gewählt wird.

Anschließend wird in Richtung des Pfeils 11 die bedampfte Platte einer Formstation 5 zugeführt, die im gezeigten Ausführungsbeispiel aus zwei Walzen 6 und 7 besteht, beispielsweise einem Kalander und einer Riffelwalze. Die Platte wird in Richtung des Pfeils 12 hindurchgeführt, so dass sich am Ende die gewellte Platte 8 ergibt.

Die Richtung des Pfeils 11 ist ausschließlich aus zeichentechnischen Gründen gewählt. Die Anordnung der Station relativ zueinander ist beliebig. Diese können für kontinuierliche Abläufe hintereinander angeordnet sein oder auch je nach Gegebenheit in anderer Relation zueinander stehen. Das beschriebene Ausführungsbeispiel dient nur der Erläuterung und ist nicht beschränkend.

### Bezugszeichen

- 1: ebene Ausgangsplatte
- 2: Bedampfungsstation
- 3: Dampfeinheit
- 4: Dampfeinheit
- 5: Formstation
- 6: Walze
- 7: Walze
- 8: verformte Platte
- 10: Vorschubrichtung oder **Plattenvorschub**
- 11: Förderrichtung oder **Plattenvorschub**
- 12: Vorschubrichtung oder **Plattenvorschub**

## Patentansprüche

1. Verfahren zur Herstellung einer dreidimensional verformten Platte aus Holzfaser-Werkstoff, wobei
a) eine vorgefertigte ebene Ausgangsplatte aus Holzfaser-Werkstoff mit Dampf beaufschlagt wird,
b) die Platte mit einem Trennmittel beschichtet
c) in einer Formstation verformt und
d) durch auskühlen ausgehärtet wird,
wobei als ebene Ausgangsplatte (1) eine MDF-Platte mit einer Dicke von 1,0 bis 3,0 mm verwendet wird und dass die Verformung zwischen wenigstens einem Walzenpaar (6, 7) durchgeführt wird, wobei die Ausgangsplatte (1) im Walzenpaar (6, 7) um mindestens 30 % verdichtet wird.

2. Verfahren nach Anspruch 1, **dadurch gekennzeichnet, dass** eine MDF Platte mit einem Flächengewicht von 1,0 bis 3,0 kg/m² verwendet wird.

3. Verfahren nach einem der vorhergehenden Ansprüche, **dadurch gekennzeichnet, dass** die Bedampfung bei einer Temperatur von 100°C bis 105°C, einem Dampfdruck von 0,1 bis 8 bar und einer Dampfmenge von 60 bis 500 kg/h durchgeführt wird.

4. Verfahren nach einem der vorhergehenden Ansprüche, **dadurch gekennzeichnet, dass** die Beschichtung durch Bedüsen erfolgt.

5. Verfahren nach Anspruch 4, **dadurch gekennzeichnet, dass** das Trennmittel in einer Menge von 10 bis 100 g/m² eingesetzt wird.

6. Verfahren nach Anspruch 1, **dadurch gekennzeichnet, dass** in der Platte eine Wellenform mit einer Wellenhöhe von 6,5 bis 50 mm ausgebildet wird.

7. Verfahren nach einem der vorhergehenden Ansprüche, **dadurch gekennzeichnet, dass** die Verformung bei einer Temperatur um 240°C und einem Druck im Bereich von 200N/mm² durchgeführt wird.

8. Verfahren nach einem der vorhergehenden Ansprüche, **dadurch gekennzeichnet, dass** während der Verformung eine zusätzliche Temperaturzufuhr erfolgt.

9. Verfahren nach einem der vorhergehenden Ansprüche, **dadurch gekennzeichnet, dass** die Auskühlung bei Umgebungstemperatur durchgeführt wird.

10. System zur Herstellung einer dreidimensional verformten Platte aus Holzfaser-Werkstoff nach dem Verfahren nach wenigstens einem der vorhergehenden Ansprüche, wenigstens umfassend
a) vorgefertigte ebene Ausgangsplatten aus Holzfaser-Werkstoff und
b) eine Bearbeitungsanlage mit
i. einer Bedampfungseinheit und
ii. einer Formstation,
wobei die ebene Ausgangsplatten (1) MDF-Platten sind, die eine Dicke von 1,5 bis 3,0 mm aufweisen, und dass die Formstation wenigstens ein Walzenpaar (6, 7) aufweist, das dazu eingerichtet ist, die Ausgangsplatten (1) im Walzenpaar (6, 7) um mindestens 30 % zu verdickten..

11. System nach Anspruch 10, **dadurch gekennzeichnet, dass** die MDF Platten ein Flächengewicht von 1,0 bis 3,0 kg/m² aufweisen.

12. System nach einem der vorhergehenden Ansprüche, **dadurch gekennzeichnet, dass** die Bedampfungseinheit mehrere Dampfausgabeeinheiten aufweist.

13. System nach einem der vorhergehenden Ansprüche, **dadurch gekennzeichnet, dass** die Bearbeitungsanlage als mobile Einheit ausgebildet ist.

## Claims

1. Method of manufacturing a three-dimensionally deformed plate made of wood fiber material, wherein
a) steam is applied to a prefabricated flat starting plate made of wood fiber material,
b) the plate is coated with a release agent,
c) deformed in a forming station and
d) cured by cooling,
wherein an MDF plate with a thickness of 1.0 to 3.0 mm is used as a flat starting plate (1) and the deformation is carried out between at least one pair of rollers (5, 7), wherein the starting plate (1) is compacted by at least 30% in said pair of rollers (5, 7).

2. Method according to claim 1, **characterized in that** an MDF plate with a weight per unit area of 1.0 to 3.0 kg/m² is used.

3. Method according to any of the preceding claims, **characterized in that** vaporization is carried out at a temperature of 100°C to 105°C, at a steam pressure of 0.1 bar to 8 bar and an amount of steam of 60 to 500 kg/h.

4. Method according to any of the preceding claims, **characterized in that** coating takes place by spraying.

5. Method according to claim 4, **characterized in that** the release agent is used at an amount of 10 to 100 g/m².

6. Method according to claim 1, **characterized in that** a waveshape with a wave height of 6.5 to 50 mm is formed in the plate.

7. Method according to any of the preceding claims, **characterized in that** the deformation is carried out at a temperature around 240°C and a pressure in the range of 200N/mm².

8. Method according to any of the preceding claims, **characterized in that** an additional temperature supply takes place during the deformation.

9. Method according to any of the preceding claims, **characterized in that** cooling takes place at ambient temperature.

10. System for manufacturing a three-dimensionally deformed plate made of wood fiber material in accordance with the method according to any of the preceding claims, the system comprising
a) prefabricated flat starting plates made of wood fiber material and
b) a processing system comprising
i. a vaporizing unit and
ii. a forming station,
wherein the flat starting plates (1) are MDF plates with a thickness of 1.0 to 3.0 mm and that the forming station comprises at least one pair of rollers (5, 7) which is configured to compact the starting plates (1) by at least 30% in said pair of rollers (5, 7).

11. System according to claim 10, **characterized in that** the MDF plates have a weight per unit area of 1.0 to 3.0 kg/m².

12. System according to any of the preceding claims, **characterized in that** the vaporization unit comprises several steam emission units.

13. System according to any of the preceding claims, **characterized in that** the processing system is designed as a mobile unit.

## Revendications

1. Procédé de fabrication d'une plaque déformée en trois dimensions en matériau à base de fibres de bois, dans lequel
a) de la vapeur est appliquée sur une plaque de départ plane préfabriquée en matériau à base de fibres de bois,
b) la plaque est revêtue d'un agent de démoulage,
c) est déformée dans une station de formage et
d) est durcie par refroidissement,
dans lequel une plaque MDF d'une épaisseur comprise entre 1,0 et 3,0 mm est utilisée comme plaque de départ plate (1) et la déformation est effectuée entre au moins une paire de rouleaux (5, 7), la plaque de départ (1) étant compactée d'au moins 30 % dans ladite paire de rouleaux (5, 7).

2. Procédé selon la revendication 1, **caractérisé en ce qu'**on utilise une plaque MDF ayant un poids par unité de surface compris entre 1,0 et 3,0 kg/m².

3. Procédé selon l'une quelconque des revendications précédentes, **caractérisé en ce que** la vaporisation est effectuée à une température comprise entre 100 °C et 105 °C, à une pression de vapeur comprise entre 0,1 bar et 8 bars et avec une quantité de vapeur comprise entre 60 et 500 kg/h.

4. Procédé selon l'une quelconque des revendications précédentes, **caractérisé en ce que** le revêtement est réalisé par pulvérisation.

5. Procédé selon la revendication 4, **caractérisé en ce que** l'agent de démoulage est utilisé en une quantité de 10 à 100 g/m².

6. Procédé selon la revendication 1, **caractérisé en ce qu'**une forme d'onde d'une hauteur comprise entre 6,5 et 50 mm est formée dans la plaque.

7. Procédé selon l'une quelconque des revendications précédentes, **caractérisé en ce que** la déformation est effectuée à une température d'environ 240°C et à une pression comprise dans la plage de 200 N/mm².

8. Procédé selon l'une quelconque des revendications précédentes, **caractérisé en ce qu'**un apport de température supplémentaire a lieu pendant la déformation.

9. Procédé selon l'une quelconque des revendications précédentes, **caractérisé en ce que** le refroidissement a lieu à température ambiante.

10. Système pour la fabrication d'une plaque déformée en trois dimensions en matériau à base de fibres de bois selon le procédé selon l'une quelconque des revendications précédentes, le système comprenant
a) plaques de départ plates préfabriquées en matériau à base de fibres de bois et
b) un système de traitement comprenant
i. une unité de vaporisation et
ii. une station de formage,
dans lequel les plaques de départ plates (1) sont des plaques MDF d'une épaisseur comprise entre 1,0 et 3,0 mm et dans lequel la station de formage comprend au moins une paire de rouleaux (5, 7) qui est configurée pour compacter les plaques de départ (1) d'au moins 30 % dans ladite paire de rouleaux (5, 7).

11. Système selon la revendication 10, **caractérisé en ce que** les panneaux MDF ont un poids par unité de surface compris entre 1,0 et 3,0 kg/m².

12. Système selon l'une quelconque des revendications précédentes, **caractérisé en ce que** l'unité de vaporisation comprend plusieurs unités d'émission de vapeur.

13. Système selon l'une quelconque des revendications précédentes, **caractérisé en ce que** le système de traitement est conçu comme une unité mobile.
